# EUROPEAN PATENT SPECIFICATION

(11) **EP 3 575 109 B1**
(45) Date of publication and mention of the grant of the patent: **12.05.2021**
(21) Application number: 19176281.4
(22) Date of filing: 23.05.2019
(51) Int. Cl.: B60C 9/06, B60C 15/00

(54) **BICYCLE TIRE WITH TWO-PLY CARCASS**
FAHRRADREIFEN MIT ZWEILAGIGER KARKASSE
PNEU DE BICYCLETTE A CARCASSE A DEUX COUCHES

(30) Priority: 29.05.2018 US 201815991269
(43) Date of publication of application: 04.12.2019
(73) Proprietor: Specialized Bicycle Components, Inc., Morgan Hill, CA 95037 (US)
(72) Inventor: LUTZ, Eva, Morgan Hill, CA 95037 (US); SCHULTE, Rüdiger, Morgan Hill, CA 95037 (US); YEH, Chun Ming, Morgan Hill, CA 95037 (US)
(74) Representative: Forresters IP LLP

(56) References cited:
- EP-A1- 0 484 831
- EP-A1- 0 635 383
- WO-A1-2017/072708
- DE-U1-202015 000 366
- FR-A1- 3 067 982
- JP-A- H06 127 209
- JP-A- H08 113 008
- JP-A- S59 120 502

## Description

### CROSS-REFERENCE TO RELATED APPLICATIONS

This application claims priority to U.S. Patent Application No. 15/991,269, filed May 29, 2018.

### BACKGROUND

The present invention relates to tire construction and specifically to a bicycle tire construction having a unique casing construction.

Modern bicycle tires are typically made with multiple casing layers that overlap to create the basic body of the tire. At least one of the casing layers wraps around bead cores on either edge of the tire to define the tire beads. A tread layer is positioned on the casing layers to provide a running surface in contact with the road. A breaker belt can be provided under the tread layer to improve puncture resistance of the tire.

DE202015000366 discloses a bicycle tire with a tire carcass with two opposite side walls, the tire carcass defining a tire interior at least in sections and wherein a bead with a bead core arranged therein is arranged at the free ends of the side walls, characterized in that an inner side of the tire carcass facing the tire interior has a fabric layer is covered, which consists of monofilament threads, which are embedded in an elastic material or in which the spaces are filled with elastic material.

EP0484831 discloses a pneumatic tyre for bicycles, having a diagonal carcass which is anchored to two bead cores. In order to largely combine the advantages of MTB tyres with those of ATB tyres, it is proposed according to the invention that with an operating air pressure of at least 3.5 bar the width of the tyre is at least 1.2 times the height of the tyre from the radially innermost circumference of the bead toe as far as the zenith and that the fibre thickness or number of layers in the zenith is at least 30 % greater than in the side walls.

EP0635383 discloses a design which aims to increase the rigidity of a tire sidewall portion without an additional reinforcing member and to make the tire sidewall flexible. A tire disclosed in this document has a carcass made of at least one carcass ply turned up around bead cores and rubber fillers from the inside to the outside and overlapped at the crown. Also the tire has at least one reinforcing layer around the overlapped portion of the carcass and the reinforcing layer is made of rubberized cords spirally wound and disposed substantially parallel with the tire equatorial plane.

WO2017/072708 discloses a tyre for bicycle wheels, comprising a carcass structure, at least one belt layer arranged in a radially outer position with respect to the carcass structure and a tread band arranged in a radially outer position with respect to the belt layer. The carcass structure comprises at least one carcass ply engaged, at the axially opposite end edges thereof, with a pair of annular anchoring structures and including a plurality of reinforcing cords inclined, with respect to an equatorial plane of the tyre, by a first angle comprised between about 65° and about 90°, the extreme values being included. Said at least one belt layer comprises at least one reinforcing cord wound onto the carcass structure according to a winding direction oriented, with respect to said equatorial plane, at a second angle comprised between about 0° and about 30°, the extreme values being included.

### SUMMARY

The present invention provides a vehicle tire as defined in claim 1.

In some embodiments, the first and second casing layers are each made of a single unidirectional ply, wherein the ply directions of the two layers are different (e.g., +45 degrees for the first casing layer and -45 degrees for the second casing layer). In these or other embodiments, sidewall regions of the tire comprise four plies of casing layers and the zenith comprises four plies of casing layers. In order to enhance sidewall stiffness, the tire can further include first and second sidewall reinforcements (e.g., rubber strips) positioned in the first and second sidewall regions, respectively.

Other aspects of the invention will become apparent by consideration of the detailed description and accompanying drawings.

### BRIEF DESCRIPTION OF THE DRAWINGS

Fig. 1 is a side view of a bicycle having tires embodying the present invention.
Fig. 2 is a flat schematic drawing of a tire construction embodying the present invention.
Fig. 3 is a round schematic drawing of the tire construction in Fig. 2.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

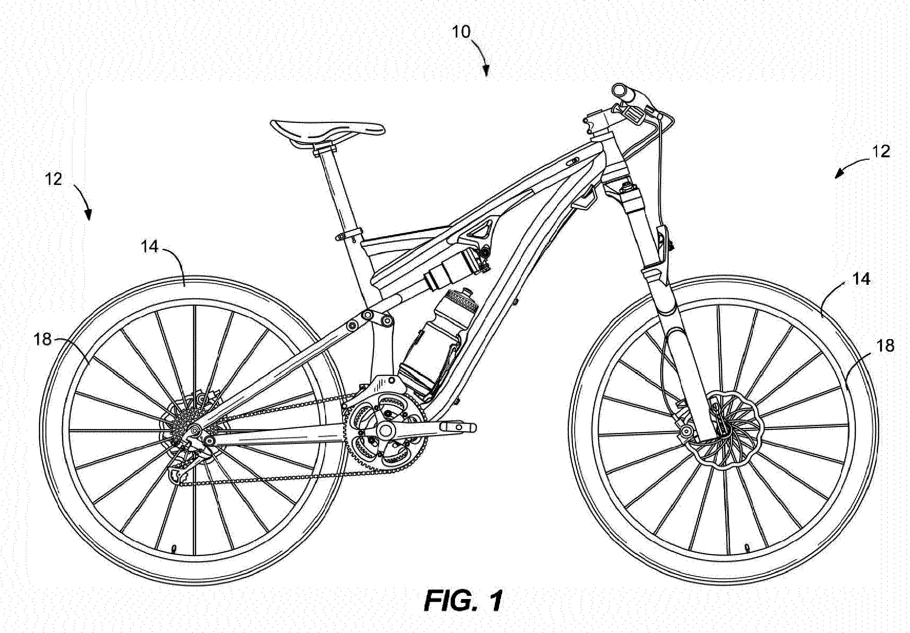

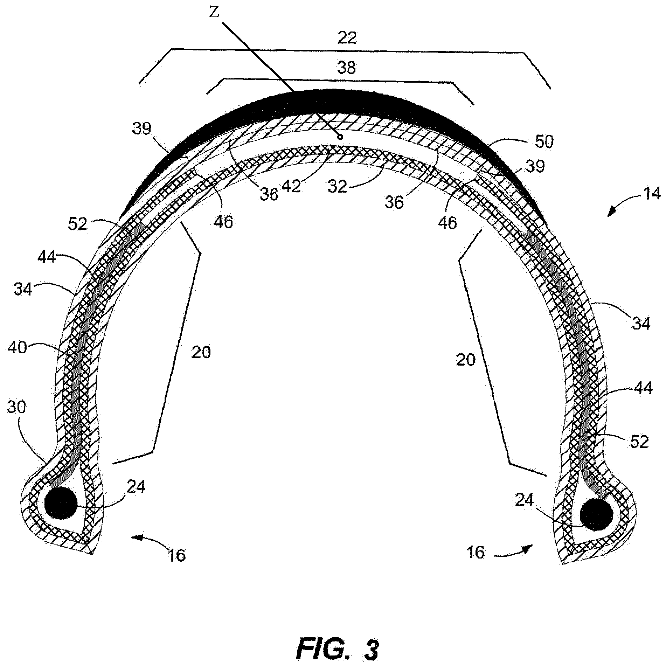

Fig. 1 illustrates a bicycle 10 including wheels 12 with tires 14 embodying the present invention. As with standard tires, the illustrated tires 14 includes typical parts, such as beads 16 (Fig. 3) that are designed to be retained in a wheel rim 18, as is known in the art. Referring to Fig. 3, the beads 16 are coupled to sidewalls 20, which lead to a tread 22. A zenith Z is defined as the center of the tire.

The illustrated tires 14 have a unique layered construction using known materials. For example, the inside of the beads 16 include bead cores 24 made of wire or a polymeric yarn bundle, such as aramid, Kevlar, or Zylon fibers, or a mix of those materials. The sidewalls 20 are formed by casing layers, described below, that similarly can be made of multiple different known casing materials, such as cloth comprising nylon, cotton or silk. Thread counts can vary, but generally are between 60 and 150 threads per inch (tpi). For airtightness, the casing cloth material can be embedded with rubber or resilient polymer, which is particularly beneficial when using the tire in a tubeless configuration.

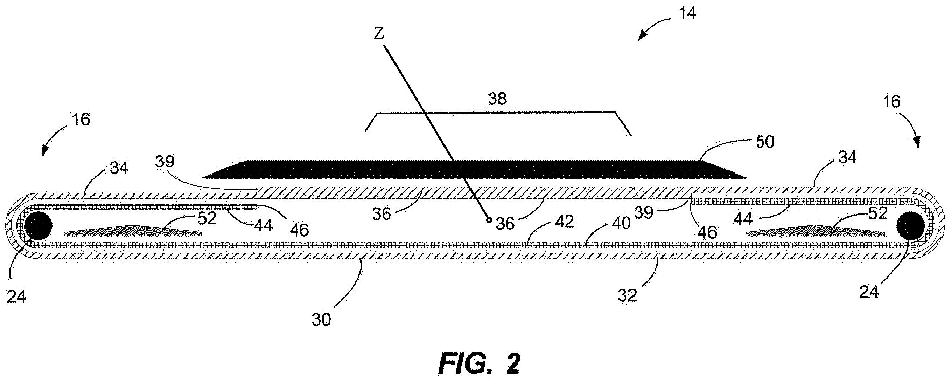

One embodiment of the present invention is represented by the schematic drawings in Figs.2-3. The illustrated tire utilizes a first casing layer 30 having a center section 32 that spans between the bead cores 24 and side sections 34 that wrap around the bead cores 24. The side sections 34 of the first casing layer 30 overlap with each other at edge sections 36 in a central tread region 38 of the tire 14, which is generally the region of the tread that contacts the road surface under normal operating conditions. Each edge section 36 of the first casing layer 30 terminates at a first edge 39 offset from the zenith of the tire. The first casing layer 30 is a unidirectional fabric oriented at +45 degrees to the direction of travel.

The illustrated tire also includes a second casing layer 40 having a center section 42 that spans between the bead cores 24 and side sections 44 that wrap around the bead cores 24. The side sections 44 of the second casing layer 40 do not overlap with each other and instead terminate at second edges 46 outside the central tread region 38. The second edges 46 are positioned substantially in alignment with the first edges 39. The second casing layer 40 is a unidirectional fabric oriented at -45 degrees to the direction of travel (i.e., the opposite ply direction as the first casing layer 30).

As shown in Figs. 2-3, the first casing layer 30 wraps around and encloses the second casing layer 40.

A tread layer 50 is positioned above and spans the central tread region 36 of the tire 14. The illustrated tread layer 50 overlaps the first and second edges 39,46 by about 5 - 7 millimeters (mm). The tread layer 50 can be made of any suitable material, such as rubber (synthetic or natural) mixed with carbon black and/or silica, as is known in the art.

The illustrated tire further includes sidewall reinforcements 52 positioned in the sidewalls. The sidewall reinforcements 52 provide added lateral stiffness to the sidewalls, which improves the direct steering impulse and directly transfers lateral forces between the bike and the ground. The illustrated sidewalls reinforcements 52 comprise rubber strips sandwiched in the second casing layer 40 between the center section 42 and the side sections 44, but it should be understood that the rubber strips can instead be positioned between other layers of the sidewall sections. The rubber strips can be made of any suitable material, such as rubber (synthetic or natural) mixed with carbon black and/or silica.

The above-described tire construction provides a tire 14 having four plies of casing layers throughout the complete cross section (i.e., the sidewalls 20 and the central tread region 38). The additional stiffness provided by the sidewall reinforcements results in a tire having stiff sidewalls, for improved steering impulse and control, and a flexible tread area, for improved ground contact area and flexible adaptation to small undulations in the ground surface.

Various features and advantages of the invention are set forth in the following claims.

When used in this specification and claims, the terms "comprises" and "comprising" and variations thereof mean that the specified features, steps or integers are included. The terms are not to be interpreted to exclude the presence of other features, steps or components.

## Claims

1. A vehicle tire comprising:
a first bead core (24) and a second bead core (24) spaced apart from each other;
a first casing layer (30) spanning between the first bead core and the second bead core and wrapped around the first bead core and the second bead core, the first casing layer having first edge sections (36) that overlap with each other at a zenith of the vehicle tire and terminate at first edges (39) on opposing sides of the zenith;
a second casing layer (40) spanning between the first bead core and the second bead core and wrapped around the first bead core and the second bead core, the second casing layer having second edge sections that do not overlap with each other and terminate at second edges (46); and
a tread layer (50) spanning the zenith;
**characterised in that**
the first casing layer (30) wraps around and encloses the second casing layer (40), and each second edge of the second edges (46) is substantially aligned with different ones of the first edges (39).

2. A vehicle tire as claimed in claim 1, wherein the first bead core (24) and the second bead core (24) each include wire or a polymeric yarn bundle comprising aramid fibers or zylon fibers.

3. A vehicle tire as claimed in any of the preceding claims, wherein the first casing layer (30) has a unidirectional ply in a first direction and the second casing layer (40) has a unidirectional ply in a second direction different from the first direction.

4. A vehicle tire as claimed in claim 3, wherein the first direction is a +45 degree direction and the second direction is a -45 degree direction.

5. A vehicle tire as claimed in any of the preceding claims, wherein the first casing layer (30) and the second casing layer (40) each comprises a unidirectional cloth including nylon, cotton, or silk.

6. A vehicle tire as claimed in any of the preceding claims, wherein the tread layer (50) comprises rubber and carbon black.

7. A vehicle tire as claimed in any one of claims 1-6, wherein a first sidewall region and a second sidewall region are defined between the tread layer (50) and the first bead core (24) and the second bead core (24), respectively, and wherein the first sidewall region and the second sidewall region each comprise four plies of casing layers (30, 40) and the zenith comprises four plies of casing layers (30, 40).

8. A vehicle tire as claimed in any one of claims 1-6, wherein a first sidewall region and a second sidewall region are defined between the tread layer (50) and the first bead core (24) and the second bead core (24), respectively, and wherein the vehicle tire further includes a first sidewall reinforcement (52) and a second sidewall reinforcement (52) positioned in the first sidewall region and the second sidewall region, respectively.

9. A vehicle tire as claimed in claim 8, wherein each of the first sidewall reinforcement (52) and the second sidewall reinforcement (52) comprises a rubber strip.

10. A vehicle tire as claimed in claim 9, wherein each of the first sidewall reinforcement (52) and the second sidewall reinforcement (52) comprises rubber mixed with carbon black and silica.

11. A vehicle tire as claimed in any of the preceding claims, wherein the tread layer (50) overlaps the first edges (39) and the second edges (46).

12. A vehicle tire as claimed in any of the preceding claims, wherein the first casing layer (30) and the second casing layer (40) each comprise a thread count between 60 and 150 threads per inch.

13. A vehicle tire as claimed in any of the preceding claims, wherein the first casing layer (30) and the second casing layer (40) each comprise casing cloth material embedded with rubber.

14. A vehicle tire as claimed in any of the preceding claims, wherein the first casing layer (30) and the second casing layer (40) each comprises casing cloth material embedded with a resilient polymer.

15. A vehicle tire as claimed in any of the preceding claims, wherein each second edge (46) is aligned with one of the first edges (39), and wherein one of the second edges (46) is disposed directly adjacent one of the first edges (39).

## Patentansprüche

1. Fahrzeugreifen, umfassend:
einen ersten Wulstkern (24) und einen zweiten Wulstkern (24), die voneinander beabstandet sind;
eine erste Mantelschicht (30), die sich zwischen dem ersten Wulstkern und dem zweiten Wulstkern erstreckt und um den ersten Wulstkern und den zweiten Wulstkern gewickelt ist, wobei die erste Mantelschicht erste Kantenabschnitte (36) aufweist, die an einem Zenit des Fahrzeugreifens miteinander überlappen und an ersten Kanten (39) auf gegenüberliegenden Seiten des Zenits enden;
eine zweite Mantelschicht (40), die sich zwischen dem ersten Wulstkern und dem zweiten Wulstkern erstreckt und um den ersten Wulstkern und den zweiten Wulstkern gewickelt ist, wobei die zweite Mantelschicht zweite Kantenabschnitte aufweist, die nicht miteinander überlappen und an zweiten Kanten (46) enden; und
eine Lauffläche (50), die den Zenit überspannt; **dadurch gekennzeichnet, dass** sich die erste Mantelschicht (30) um die zweite Mantelschicht (40) wickelt und diese umschließt und jede zweite Kante der zweiten Kanten (46) im Wesentlichen mit verschiedenen der ersten Kanten (39) ausgerichtet ist.

2. Fahrzeugreifen nach Anspruch 1, wobei der erste Wulstkern (24) und der zweite Wulstkern (24) jeweils Draht oder ein polymeres Garnbündel umfassend Aramidfasern oder Zylonfasern beinhalten.

3. Fahrzeugreifen nach einem der vorhergehenden Ansprüche, wobei die erste Mantelschicht (30) eine unidirektionale Lage in einer ersten Richtung aufweist und die zweite Mantelschicht (40) eine unidirektionale Lage in einer zweiten, sich von der ersten Richtung unterscheidenden Richtung aufweist.

4. Fahrzeugreifen nach Anspruch 3, wobei die erste Richtung eine +45-Grad-Richtung ist und die zweite Richtung eine -45-Grad-Richtung ist.

5. Fahrzeugreifen nach einem der vorhergehenden Ansprüche, wobei die erste Mantelschicht (30) und die zweite Mantelschicht (40) jeweils ein unidirektionales Tuch einschließlich Nylon, Baumwolle oder Seide umfasst.

6. Fahrzeugreifen nach einem der vorhergehenden Ansprüche, wobei die Lauffläche (50) Gummi und Ruß umfasst.

7. Fahrzeugreifen nach einem der Ansprüche 1-6, wobei eine erste Seitenwandregion und eine zweite Seitenwandregion zwischen der Lauffläche (50) und dem ersten Wulstkern (24) bzw. dem zweiten Wulstkern (24) definiert sind und wobei die erste Seitenwandregion und die zweite Seitenwandregion jeweils vier Lagen von Mantelschichten (30, 40) umfassen und der Zenit vier Lagen von Mantelschichten (30, 40) umfasst.

8. Fahrzeugreifen nach einem der Ansprüche 1-6, wobei eine erste Seitenwandregion und eine zweite Seitenwandregion zwischen der Lauffläche (50) und dem ersten Wulstkern (24) bzw. dem zweiten Wulstkern (24) definiert sind und wobei der Fahrzeugreifen ferner eine erste Seitenwandverstärkung (52) und eine zweite Seitenwandverstärkung (52) mit Positionierung in der ersten Seitenwandregion bzw. der zweiten Seitenwandregion beinhaltet.

9. Fahrzeugreifen nach Anspruch 8, wobei jede der ersten Seitenwandverstärkung (52) und der zweiten Seitenwandverstärkung (52) einen Gummistreifen umfasst.

10. Fahrzeugreifen nach Anspruch 9, wobei jede der ersten Seitenwandverstärkung (52) und der zweiten Seitenwandverstärkung (52) mit Ruß und Siliziumdioxid gemischtes Gummi umfasst.

11. Fahrzeugreifen nach einem der vorhergehenden Ansprüche, wobei die Lauffläche (50) die ersten Kanten (39) und die zweiten Kanten (46) überlappt.

12. Fahrzeugreifen nach einem der vorhergehenden Ansprüche, wobei die erste Mantelschicht (30) und die zweite Mantelschicht (40) jeweils eine Fadenzahl zwischen 60 und 150 Fäden pro Zoll umfassen.

13. Fahrzeugreifen nach einem der vorhergehenden Ansprüche, wobei die erste Mantelschicht (30) und die zweite Mantelschicht (40) jeweils mit Gummi eingebettetes Manteltuchmaterial umfassen.

14. Fahrzeugreifen nach einem der vorhergehenden Ansprüche, wobei die erste Mantelschicht (30) und die zweite Mantelschicht (40) jeweils mit einem elastischen Polymer eingebettetes Manteltuchmaterial umfassen.

15. Fahrzeugreifen nach einem der vorhergehenden Ansprüche, wobei jede zweite Kante (46) mit einer der ersten Kanten (39) ausgerichtet ist und wobei eine der zweiten Kanten (46) direkt an eine der ersten Kanten (39) angrenzend angeordnet ist.

## Revendications

1. Un pneu pour véhicule comprenant :
une première tringle (24) et une deuxième tringle (24) espacées l'une de l'autre ;
une première nappe de carcasse (30) s'étendant entre la première tringle et la deuxième tringle et enroulée autour de la première tringle et la deuxième tringle, la première nappe de carcasse ayant des sections de premier bord (36) qui se recouvrent à un sommet du pneu de véhicule et se terminent à des premiers bords (39) sur des côtés opposés du sommet ;
une deuxième nappe de carcasse (40) s'étendant entre la première tringle et la deuxième tringle et enroulée autour de la première tringle et la deuxième tringle, la deuxième nappe de carcasse ayant des sections de deuxième bord qui ne se recouvrent pas et se terminent au niveau de deuxièmes bords (46) ; et
une nappe de bande de roulement (50) s'étendant sur le sommet ;
**caractérisé en ce que** la première nappe de carcasse (30) s'enroule autour de la deuxième nappe de carcasse (40) et renferme celle-ci, et chaque deuxième bord des deuxièmes bords (46) est sensiblement aligné avec des bords différents des premiers bords (39).

2. Un pneu pour véhicule selon la revendication 1, dans lequel la première tringle (24) et la deuxième tringle (24) comprennent chacune un fil métallique ou un faisceau de fils polymères comprenant des fibres aramides ou des fibres de Zylon.

3. Un pneu pour véhicule selon une quelconque des revendications précédentes, dans lequel la première nappe de carcasse (30) a une couche unidirectionnelle dans une première direction et la deuxième nappe de carcasse (40) a une couche unidirectionnelle dans une deuxième direction différente de la première direction.

4. Un pneu pour véhicule selon la revendication 3, dans lequel la première direction est une direction de +45 degrés et la deuxième direction est une direction de -45 degrés.

5. Un pneu pour véhicule selon une quelconque des revendications précédentes, dans lequel la première nappe de carcasse (30) et la deuxième nappe de carcasse (40) comprennent chacune un tube unidirectionnel comprenant du nylon, du coton ou de la soie.

6. Un pneu pour véhicule selon une quelconque des revendications précédentes, dans lequel la bande de roulement (50) comprend du caoutchouc et du noir de carbone.

7. Un pneu pour véhicule selon une quelconque des revendications 1 à 6, dans lequel une première zone de flanc et une deuxième zone de flanc sont définies entre la bande de roulement (50) et la première tringle (24) et la deuxième tringle (24), respectivement, et dans lequel la première zone de flanc et la deuxième zone de flanc comprennent chacune trois couches de nappes de carcasse (30, 40) et le somment comprend quatre couches de nappes de carcasse (30, 40).

8. Un pneu pour véhicule selon une quelconque des revendications 1 à 6, dans lequel une première zone de flanc et une deuxième zone de flanc sont définies entre la bande de roulement (50) et la première tringle (24) et la deuxième tringle (24), respectivement, le pneu pour véhicule comprenant en sus un premier renfort de flanc (52) et un deuxième renfort de flanc (52) positionnés respectivement dans la première zone de flanc et la deuxième zone de flanc.

9. Un pneu pour véhicule selon la revendication 8, dans lequel chacun du premier renfort de flanc (52) et du deuxième renfort de flanc (52) comprend une bande de caoutchouc.

10. Un pneu pour véhicule selon la revendication 9, dans lequel chacun du premier renfort de flanc (52) et du deuxième renfort de flanc (52) comprend du caoutchouc mélangé à du noir de carbone et de la silice.

11. Un pneu pour véhicule selon une quelconque des revendications précédentes, dans lequel la bande de roulement (50) recouvre les premiers bords (39) et les deuxièmes bords (46).

12. Un pneu pour véhicule selon une quelconque des revendications précédentes, dans lequel la première nappe de carcasse (30) et la deuxième nappe de carcasse (40) comprennent chacune une contexture entre 60 et 150 fils par pouce.

13. Un pneu pour véhicule selon une quelconque des revendications précédentes, dans lequel la première nappe de carcasse (30) et la deuxième nappe de carcasse (40) comprennent chacune un matériau de tissu de carcasse intégré à du caoutchouc.

14. Un pneu pour véhicule selon une quelconque des revendications précédentes, dans lequel la première nappe de carcasse (30) et la deuxième nappe de carcasse (40) comprennent chacune un matériau de tissu de carcasse intégré à un polymère souple.

15. Un pneu pour véhicule selon une quelconque des revendications précédentes, dans lequel chaque deuxième bord (46) est aligné avec l'un des premiers bords (39), et dans lequel l'un des deuxièmes bords (46) est disposé en position directement adjacente à l'un des premiers bords (39).
